# EUROPEAN PATENT APPLICATION

(11) **EP 4 800 545 A1**
(43) Date of publication of application: **02.09.2026**
(21) Application number: 25160310.6
(22) Date of filing: 26.02.2025
(51) Int. Cl.: G06F 8/71, G06F 11/3668, G06F 8/65

(54) **CHECKING A CONFIGURATION OF A TECHNICAL SYSTEM AS PART OF AN INDUSTRIAL DEVOPS PIPELINE**

(71) Applicant: Siemens Aktiengesellschaft, 80333 München (DE)
(72) Inventor: Jayaram, Deepak, 81379 Munich (DE)
(74) Representative: Siemens Patent Attorneys

(57) **Abstract**

Apparatus (100) for checking a configuration of a technical system (TS) against a given test criterion (TC) as part of an industrial DevOps pipeline, the technical system comprising a plurality of physical components and software components (C1, ..., C6), the apparatus (100) comprising:
- a first storage unit (101) that is configured to store computer simulation models (SIM1, ..., SIM6) of the physical and software components (C1, ..., C6) of the technical system (TS),
- a second storage unit (102) that is configured to store mapping data (MP) that depict all dependencies between the physical and software components (C1, ..., C6) of the technical system (TS) according to the given configuration of the technical system, wherein the mapping data (MP) are based on a control flow chart (CFC) representing a control flow between the physical and software components of the technical system,
- a selection unit (103) that is configured to select at least one software or physical component (C3) of the technical system (TS),
- an analysis unit (104) that is configured to determine all physical and/or software components (C5, C6) that depend on the selected component (C3) based on the mapping data (MP),
- a processing unit (105) that is configured to load and run only the computer simulation models (SIM3, SIM5, SIM6) of the selected component (C3) and the dependent components (C5, C6) thereof and to return a simulation result (SIMR) for said configuration of the technical system,
- a test unit (106) that is configured to check the simulation result (SIMR) against the given test criterion (TC) and to return a test result (TR),
and
- an output unit (107) that is configured to output the test result (TR) for said configuration of the technical system (TS).

## Description

The present invention relates to an apparatus and a computer-implemented method for checking a configuration of a technical system as part of an industrial DevOps pipeline, as well as a computer program product.

A technical or cyber-physical system such as a machine comprises of multiple software and/or physical components. Each component serves functionally with specific operating conditions and is interconnected with at least one other component of the technical system. In a component's lifecycle, there could be multiple releases such as firmware updates, i.e., device specific updates, or software updates, i.e. application specific updates, or configuration updates, i.e., settings of the physical component.

Industrial DevOps is the application of continuous delivery and DevOps principles to the development, manufacturing, deployment, and serviceability of technical/cyber-physical systems.

A digital twin is a digital representation or computer simulation of a physical and/or software component that can be used for integration, testing, and/or monitoring. As a component can undergo multiple updates in its lifecycle, integrating a digital twin of a component in DevOps pipelines enables efficient testing and maintenance of a technical system before being deployed and run on production.

However, the control flow of how and which system components interact with each other is not represented in a DevOps pipeline for digital twins. This means even if only one component is updated and released, the digital twin of the entire technical system needs to be loaded in a DevOps pipeline. This approach is not efficient and reduces time for delivery, especially if the system is complex and comprises a large number of different components.

It is therefore an objective of the present invention to improve the efficiency of an industrial DevOps pipeline using digital twins of a technical system enabling efficient deployment, testing and maintenance of the technical system.

The object is solved by the features of the independent claims. The dependent claims contain further developments of the invention.

The invention provides according to the first aspect an apparatus for checking a configuration of a technical system against a given test criterion as part of an industrial DevOps pipeline, the technical system comprising a plurality of physical components and software components, the apparatus comprising:
- a first storage unit that is configured to store computer simulation models of the physical and software components of the technical system,
- a second storage unit that is configured to store mapping data that depict all dependencies between the physical and software components of the technical system according to the given configuration of the technical system, wherein the mapping data are based on a control flow chart representing a control flow between the physical and software components of the technical system,
- a selection unit that is configured to select at least one software or physical component of the technical system,
- an analysis unit that is configured to determine all physical and/or software components that depend on the selected component based on the mapping data,
- a processing unit that is configured to load and run only the computer simulation models of the selected component and the dependent components thereof and to return a simulation result for said configuration of the technical system,
- a test unit that is configured to check the simulation result against the given test criterion and to return a test result,
   and
- an output unit that is configured to output the test result for said configuration of the technical system.

It is an advantage of the present invention that the time for running a DevOps pipeline using simulation models or digital twins can be minimized, as only the simulation/digital twin models of the relevant components are loaded according to control flow. This approach leads to a more efficient DevOps pipeline. To this end, a control flow data among the system's components is included. Based on the control flow data, a component mapping that depicts the immediate dependency/functional interface for each component is generated. Therewith, only the digital twins of those components which are appearing only after the affected/updated component in control flow are loaded for testing in DevOps pipelines. This approach reduces hence time for testing and releasing software and firmware updates. Furthermore, the invention enables improved component level release, update and testing in complex technical systems.

According to a preferred embodiment of the invention, the control flow chart may be a Sequential Function Chart (SFC) or a Continuous Function Chart (CFC).

This enables depicting the technical system's control flow in a structured way in order to determine relevant components of the technical system that are affected by an update of one component.

According to another embodiment of the invention the selection of the at least one component may depend on an update of a software and/or firmware of said component.

The DevOps pipeline is preferably triggered after an update of a software and/or firmware of a component.

According to another embodiment of the invention, the test criterion is based on a predefined test case for testing a functionality of the technical system.

According to another embodiment the apparatus may further comprise a comparison unit that is configured to compare predefined test cases with events of a fault tree analysis (FTA) for the technical system and to return a comparison result.

According to another embodiment of the invention, the test unit may further be configured to, in case of a negative comparison result, incorporate a respective event of the fault tree analysis as test case and vice versa.

A Fault Tree Analysis (FTA) is a top-down approach to analyze failures in a control system usually starting with identifying a potential top level undesirable event and determining all the ways in which it can occur. This analysis proceeds to identify any individual event or combination of lower-level failures, such that all possible combination of failure scenarios are represented in a binary fault tree form. By comparing predefined test cases of a DevOps pipeline with FTA events and adding missing events, the level of testing the configuration of a technical system can be improved. Hence, coupling FTA into a DevOps in the context of testing increases the chance of capturing failure scenarios and improves the test coverage and thus quality of releases in control systems. The analysis of test cases furthermore provides feedback to the FTA and increases its maturity ensuring that failure events due to components' update(s) are captured. Since FTA is usually particularly used as quick reference to failure analysis, this leads to a well-maintained FTA. Such comparison and adaption of test cases can further be extended to include other topics of failure such as Functional Hazard Assessment, Failure Types and Modes classification for further quality improvements.

The invention provides according to the second aspect a computer-implemented method for checking a configuration of a technical system against a given test criterion as part of an industrial DevOps pipeline, wherein the technical system comprises a plurality of physical components and software components, the method comprising:
- storing computer simulation models of the physical and software components of the technical system,
- storing mapping data that depict all dependencies between the physical and software components of the technical system according to the given configuration of the technical system, wherein the mapping data are based on a control flow chart representing a control flow between the physical and software components of the technical system,

- selecting at least one software or physical component of the technical system,
- determining all physical and/or software components that depend on the selected component based on the mapping data,
- loading and running only the computer simulation models of the selected component and the dependent components thereof and to return a simulation result for said configuration of the technical system,
- checking the simulation result against the given test criterion and returning a test result,
   and
- outputting the test result for said configuration of the technical system.

In addition, a computer program product (non-transitory computer readable storage medium having instructions, which when executed by a processor, performs actions) is claimed having program instructions for performing the aforementioned method.

The invention will be explained in more detail by reference to the accompanying figures.
- Fig. 1:: shows an exemplary embodiment of an apparatus for checking a configuration of a technical system against a given test criterion as part of an industrial DevOps pipeline; and
- Fig. 2:: shows an exemplary embodiment of a computer-implemented method for checking a configuration of a technical system against a given test criterion as part of an industrial DevOps pipeline.

Equivalent parts in the different figures are labeled with the same reference signs.

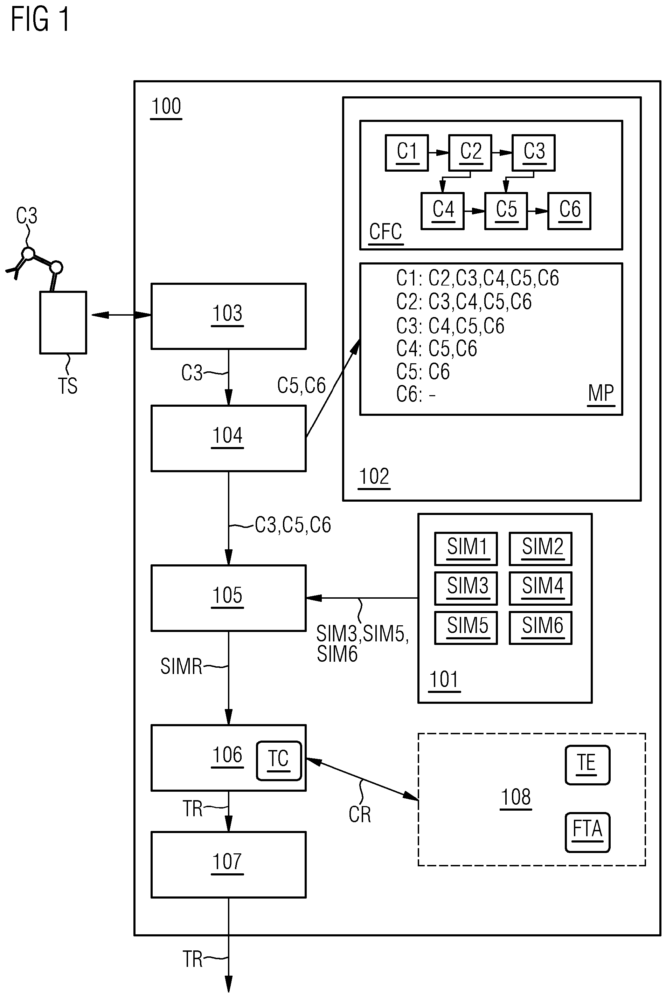

Figure 1 shows an exemplary embodiment of an apparatus 100 for checking a configuration of a technical system TS against a given test criterion TC as part of an industrial DevOps pipeline. The technical system TS can be for example a machine, a robot or a manufacturing plant. The technical system TS comprises a plurality of physical components and software components C1, ..., C6. The technical system TS has a given configuration, i.e., for example, individual physical components have a given setting and/or parameter configuration and/or software components have a given software version. In case of a software and/or firmware update of a given component C3, this updated configuration of the technical system TS can be tested using the apparatus 100 as part of an industrial DevOps pipeline.

The apparatus 100 comprises a first storage unit 101, a second storage unit 102, a selection unit 103, an analysis unit 104, a processing unit 105, a test unit 106, and an output unit 107. The apparatus 100 may further comprise a comparison unit 108. The apparatus 100 may be connected to the technical system TS for data transfer.

The first storage unit 101 is configured to store and to provide computer simulation models SIM1, ..., SIM6 of the physical or software components C1, ..., C6 of the technical system TS. The computer simulation models SIM1, ..., SIM6 may also be known as digital twins of the respective physical or software components C1, ..., C6. The computer simulation models SIM1, ..., SIM6 are configured to simulate the functionality and/or physical behaviour of the respective component C1, ..., C6, respectively.

The second storage unit 102 is configured to store and to provide mapping data MP that depict all dependencies between the physical and software components C1, ..., C6 of the technical system TS according to the given configuration of the technical system TS, such as functional dependencies (e.g., data transfer) or physical dependencies (e.g., a physical connection). The mapping data MP are based on a control flow chart CFC, as for example a Sequential Function Chart (SFC) or a Continuous Function Chart (CFC), that represents a control flow between the physical and software components C1, ..., C6 of the technical system TS.

The selection unit 103 is configured to select at least one software or physical component C3 of the technical system TS. The component selection can for example be implemented as selecting a name or identification number of a respective component from a given list. The selection of the at least one component may depend on an update of a software and/or firmware of said component.

The analysis unit 104 is configured to determine all physical and/or software components that depend on the selected component based on the mapping data MP and to provide respective identifiers of those components.

The processing unit 105 is configured to load from the first storage unit 101 only the computer simulation models of the selected component and the dependent components thereof, to run those simulation models, and to return a simulation result for said configuration of the technical system. To this end, the processing unit may use either the mapping data MP and/or information, such as name, identification number or similar of the selected component and the dependent components thereof, in order to request the relevant computer simulation models from the first storage unit 101.

The test unit 106 is configured to check the simulation result SIMR against the given test criterion TC and to return a test result TR. To this end, the test unit 106 performs testing of the technical system based on the computer simulation and depending on a given test case. The test criterion TC can therefore be for example based on a predefined test case for testing a functionality of the technical system TS and or of at least one of the selected components C3, C5, C6. For example, the test criterion TC may be related to a requirement that the technical system must fulfil.

The output unit 107 is configured to output the test result TR for said configuration of the technical system TS.

For example, the technical system TS is an industrial robot made of multiple discrete software and physical components represented from C1 to C6. The component C3 is a robot cell that receives a new firmware update and hence the effect and functionality of the technical system after this update should be ensured. Due to the firmware update, the robot cell C3 is selected by the selection unit 103 by providing its identification number or similar. For example, the firmware update of the robot cell C3 is published to repository and a DevOps pipeline is triggered to begin the general testing stages such as build, run and test. The control flow chart CFC depicts the dependencies or control flow between the components C1 to C6 of the robot TS wherein the control starts at C1 and ends at C6. Based on the control flow chart CFC, the mapping data MP provide those components that depend on the selected component C3, i.e., in this example components C5 and C6. The mapping data reflect the forward interaction or dependency of a component according to its control flow. Then, only the computer simulation models / digital twins of the selected component C3 as well as of the affected components C5, and C6 are loaded from the first storage unit 101 and sent for the testing/simulating stage.

The processing unit 105 is configured to load and run only the computer simulation models SIM3, SIM5, SIM6 of the selected component C3 and the dependent components C5, C6 thereof and to return a simulation result SIMR for said configuration of the technical system TS. To this end, the processing unit 105 may use either the mapping data MP and/or information, such as name, identification number or similar of the selected component C3 and the dependent components C5, C6 thereof, in order to request the relevant computer simulation models SIM3, SIM5, SIM6, that are assigned to the respective components C3, C5, C6, from the first storage unit 101.

The optional comparison unit 108 is configured to compare predefined test cases for testing the technical system TS with events of a fault tree analysis FTA for the technical system TS and to return a comparison result CR. The FTA event or the test case then serves as a basis for defining the test criterion TC. In case of a negative comparison result, i.e., if a test case or an event of the FTA is not represented in each case, the test unit 105 is configured to incorporate a respective event of the fault tree analysis FTA as test case TE or vice versa. Therefore, based on the functionality of the technical system TS, test cases for component(s) and/or the whole technical system can be created for the testing phase of the DevOps/TwinOps pipeline as part of a release process. Before running actual test cases TE, a comparison of existing test cases TE with the available FTA can be made for inclusion and completeness of all faults defined in FTA. Since, FTA is a top-down approach to collect failure occurrence, including such failure events are relevant for test cases and hence any non-reported failure events from FTA will be included as test cases from this comparison. Subsequently, the test cases are executed as part of testing activities. Such a comparison will also validate the failures captured originally in FTA besides increasing the maturity of it. Finally, if there are no new findings or further analysis of test cases execution are required, and all the test cases have passed successfully, then the update(s) can be released and deployed. With this approach, the coverage and quality of testing as well as the maturing of FTA increases due to inclusion of feedback between them.

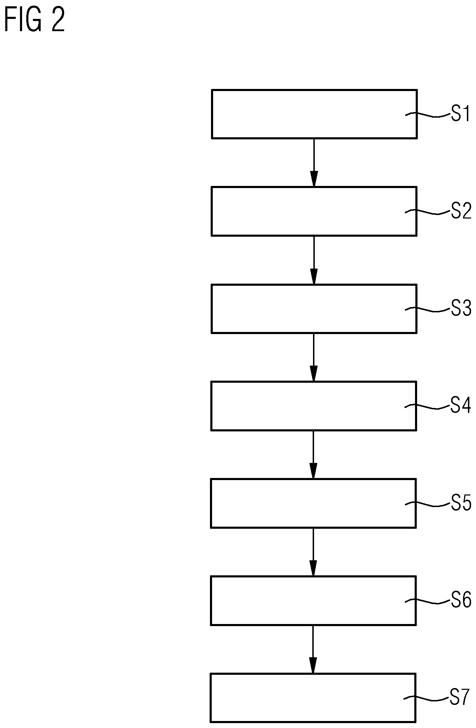

Figure 2 shows an exemplary embodiment of a computer-implemented method of a computer-implemented method for checking a configuration of a technical system against a given test criterion as part of an industrial DevOps pipeline.

In the proposed method, a control flow among the system components in the form of control flow chart, e.g., a Sequential Function Chart (SFC) or Continuous Function Chart (CFC), is included. Based on these control flow data, a component mapping depicting the immediate dependency/functional interface for each component is generated. Therewith, only the digital twin of those components which are appearing only after the affected/updated component in control flow is loaded for testing in DevOps pipelines.

The method comprises the following method steps:
In a first step S1, computer simulation models of the physical and software components of the technical system are stored and can be retrieved from a storage unit.

In the next step S2 mapping data are stored wherein the mapping data depict all dependencies between the physical and software components of the technical system according to the given configuration of the technical system. The mapping data are based on a control flow chart representing a control flow between the physical and software components of the technical system.

In the next step S3 at least one software or physical component of the technical system is selected, wherein the selection may depend on an update of a software and/or firmware of said component.

In the next step S4 all physical and/or software components are determined that depend on the selected component based on the mapping data and respective identifiers of those components are provided.

In the next step S5 only the computer simulation models of the selected component and the dependent components thereof are retrieved from the storage unit and run to return a simulation result for said configuration of the technical system.

In the next step S6 the simulation result is checked against the given test criterion and a test result is provided. Preferably, predefined test cases are checked for completeness before the testing phase using predefined FTA events such that all possible failure events can be taken into account during testing. For example, the computer simulation provides a simulated sensor value of a sensor monitoring a physical variable of the technical system. The test criterion can be for example a given target value for said sensor. Then, the simulation result can be checked against this target value and a respective test result can be returned. For example, the sensor failure threshold at a temperature of >=50°C may be specified in FTA. The test criterion can be for example the given target value of >=50°C for said sensor. Then, the simulation result can be checked against this target value and a respective test result can be returned.

Additionally, any failure events that are undefined in FTA are detected in testing phase, they can be analysed to improve the completeness of the FTA. For example, sensor failure is persistently detected during testing phase at an operating temperature >40°C and frequency >=10 KHz. However, if this is a valid parameter combination for sensor failure and is missing in FTA, the proposed mechanism enables this to be added in FTA.

In the next step S7 the test result for said configuration of the technical system is provided. Depending on the test result, the configuration of the technical system can be released or the release can be refused.

All of the described and/or drawn features as shown by the embodiments can be advantageously combined within the scope of the invention.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Apparatus (100) for checking a configuration of a technical system (TS) against a given test criterion (TC) as part of an industrial DevOps pipeline, the technical system comprising a plurality of physical components and software components (C1, ..., C6), the apparatus (100) comprising:
- a first storage unit (101) that is configured to store computer simulation models (SIM1, ..., SIM6) of the physical and software components (C1, ..., C6) of the technical system (TS),
- a second storage unit (102) that is configured to store mapping data (MP) that depict all dependencies between the physical and software components (C1, ..., C6) of the technical system (TS) according to the given configuration of the technical system, wherein the mapping data (MP) are based on a control flow chart (CFC) representing a control flow between the physical and software components of the technical system,
- a selection unit (103) that is configured to select at least one software or physical component (C3) of the technical system (TS),
- an analysis unit (104) that is configured to determine all physical and/or software components (C5, C6) that depend on the selected component (C3) based on the mapping data (MP),
- a processing unit (105) that is configured to load and run only the computer simulation models (SIM3, SIM5, SIM6) of the selected component (C3) and the dependent components (C5, C6) thereof and to return a simulation result (SIMR) for said configuration of the technical system,
- a test unit (106) that is configured to check the simulation result (SIMR) against the given test criterion (TC) and to return a test result (TR),
and
- an output unit (107) that is configured to output the test result (TR) for said configuration of the technical system (TS).

2. Apparatus according to claim 1, wherein the control flow chart (CFC) is a Sequential Function Chart or a Continuous Function Chart.

3. Apparatus according to one of the preceding claims, wherein the selection of the at least one component (C3) depends on an update of a software and/or firmware of said component.

4. Apparatus according to one of the preceding claims, wherein the test criterion (TC) is based on a predefined test case (TE) for testing a functionality of the technical system.

5. Apparatus according to one of the preceding claims, further comprising a comparison unit (108) that is configured to compare predefined test cases (TE) with events of a fault tree analysis (FTA) for the technical system and to return a comparison result (CR).

6. Apparatus according to claim 5, wherein the test unit (106) is further configured to, in case of a negative comparison result (CR), incorporate a respective event of the fault tree analysis as test case (TE) and vice versa.

7. Computer-implemented method for checking a configuration of a technical system against a given test criterion as part of an industrial DevOps pipeline, wherein the technical system comprises a plurality of physical components and software components, the method comprising:
- storing (S1) computer simulation models of the physical and software components of the technical system,
- storing (S2) mapping data that depict all dependencies between the physical and software components of the technical system according to the given configuration of the technical system, wherein the mapping data are based on a control flow chart representing a control flow between the physical and software components of the technical system,
- selecting (S3) at least one software or physical component of the technical system,
- determining (S4) all physical and/or software components that depend on the selected component based on the mapping data,
- loading and running (S5) only the computer simulation models of the selected component and the dependent components thereof and to return a simulation result for said configuration of the technical system,
- checking (S6) the simulation result against the given test criterion and returning a test result, and
- outputting (S7) the test result for said configuration of the technical system.

8. Computer program product directly loadable into the internal memory of a digital computer, comprising software code portions for performing the method steps of claim 7 when said computer program product is run on the computer.
